# EUROPEAN PATENT APPLICATION

(11) **EP 1 621 315 A1**
(43) Date of publication of application: **01.02.2006**
(21) Application number: 04728948.3
(22) Date of filing: 22.04.2004
(51) Int. Cl.: B29C 45/17, B29L 11/00

(54) **MOLDING METHOD AND MOLDING DEVICE UTILIZING ULTRASONIC VIBRATION AND OPTICAL LENS**

(30) Priority: 25.04.2003 JP 2003121232
(71) Applicant: HOYA CORPORATION, Shinjuku-ku, Tokyo 161-8525 (JP); IDEMITSU KOSAN CO., LTD., Tokyo 100-8321 (JP)
(72) Inventor: SAITO, Kiyohiro;, injuku-ku, Tokyo;1618525 (JP); INOUE, Kazuo;, injuku-ku, Tokyo;1618525 (JP); SATO, Atsushi, 2990107 (JP); MINOOKA, Hiroyoshi, 2990107 (JP)
(74) Representative: Gille Hrabal Struck Neidlein Prop Roos
(86) International application number: PCT/JP2004/005800
(87) International publication number: WO 2004/096521

(57) **Abstract**

A molding method is provided which can further improve transferability and further reduce strain and which is suitable for molding of a product with high accuracy and high quality.

The molding method in which a resin material is filled into a cavity formed in a mold and pressurized to mold a product in a predetermined shape, and the method comprises: preparing the mold having a product cavity to mold the product made of a resin, a dummy cavity to mold a dummy product, and a runner by which the product cavity and the dummy cavity are connected; filling the resin material into the product cavity and supplying the resin material to at least part of the dummy cavity; and applying ultrasonic vibration to the resin material in the dummy cavity at predetermined timing.

## Description

### Technical Field

The present invention relates to a molding technique comprising filling a resin material into a cavity formed in a mold and compressing it to obtain a product in a predetermined shape. More particularly, it relates to a molding method using ultrasonic vibration to mold optical lenses (such as spectacle lenses) with high accuracy and high quality; a molding machine; and the optical lenses.

### Background Art

A technique has heretofore been known to manufacture products such as optical lenses requiring high accuracy by injection molding (e.g., refer to description of a specification and drawings of Japanese Patent Publication Laid-open No. 9-272143, and description of a specification and drawings of Japanese Patent Publication Laid-open No. 9-277327).

However, when, for example, the optical lenses are injection-molded by use of a method described in Japanese Patent Publication Laid-open No. 9-272143, there is a problem that a resin material contracts when it is cooled and solidified in a cavity, which deteriorates transferability of a mold to the product and makes it impossible to obtain a desired accuracy. Thus, in conventional injection molding, the cavity is formed in such a manner as to add a correction value to a target power in consideration of the contraction (strain) during cooling and solidification and the deterioration of transferability, so that the optical lens with the target power can be obtained when it is taken out from the cavity. For example, in order to mold an optical lens having a target power of -4.0 diopters (D), the cavity is formed to suit to a shape of the optical lens having a power of "-4.0 (D) + α" in which the correction value α is added. However, this method still has a problem that the molding of the optical lens with high accuracy is difficult.

Furthermore, in order to improve the transferability, an injection pressure during the molding may be increased, but if the injection pressure is increased, another problem occurs wherein a molding machine with high clamping force is needed and highly rigid mold is required, which leads to the increase of costs. Moreover, to suppress the strain, highly accurate mold temperature adjustment is carried out and cooling time is extended to reduce the strain and to improve the transferability as described in Japanese Patent Publication Laid-open No. 9-277327, but this manner causes such a problem that a molding cycle is too long, which is not suitable for practical application.

In addition to the above, various proposals have been made to obtain the highly accurate optical lenses in an injection molding machine (e.g., refer to an abstract and drawings of Japanese Patent Publication Laid-open No. 7-100878).

In a technique described in Japanese Patent Publication Laid-open No. 7-100878 mentioned above, a movable mold is provided with a first punch 7 which can plunge into a plate-like cavity and can vibrate in a plunge direction, and a fixed mold is provided with a second punch which is disposed opposite to the first punch so as to sandwich the plate-like cavity and which can follow the first punch and can synchronize with the same. Moreover, a plunge surface of at least one of the punches is provided with a molding shape portion of a product section 5 to be transferred to a product surface, so that the compression, pressurization, punching, etc. of the product section 5 are performed while both the punches are being vibrated during an injection molding process.

This technique is effective to reduce internal strain and to improve the transferability, but has a problem that it still cannot obtain sufficient effects when optical lenses with higher accuracy are molded.

This invention has been attained in view of the foregoing problems, and its objects are to provide a method of molding a product using ultrasonic wave which can improve the transferability during molding and further reduces strain and which is suitable to a product such as an optical lens requiring high accuracy and high quality, and to provide the optical lens such as a spectacle lens molded by a molding machine to implement the molding method and in accordance with this molding method.

### Disclosure of the Invention

As a result of dedicated studies, the inventors of the present invention have found out that ultrasonic vibration is applied to a resin material located outside a cavity of a product when the resin material is filled into the cavity to mold the product, and this allows improvement in transferability and a reduction in strain.

That is, a first aspect of the present invention is directed to a molding method using ultrasonic vibration in which a resin material in a molten state is filled into a cavity of a mold and cooled down to obtain a product in a predetermined shape, the method comprising preparing the mold having a product cavity to mold the product, a dummy cavity to mold a dummy product, and a runner by which the product cavity and the dummy cavity are connected; filling the resin material into the product cavity and supplying the resin material in the molten state to at least part of the dummy cavity; and applying the ultrasonic vibration to the resin material in the dummy cavity at predetermined timing.

A second aspect of the present invention is directed to a molding method using ultrasonic vibration in which a resin material in a molten state is filled into a cavity of a mold and cooled down to mold a product in a predetermined shape, the method comprising preparing the mold having a plurality of product cavities to mold the products, a runner by which the product cavities are connected to each other, and a resin pit provided at a halfway part of the runner; supplying the resin material to the resin pit and filling the resin material into all of the plurality of product cavities; and applying the ultrasonic vibration to the resin material in the resin pit at predetermined timing.

According to these methods of the present invention, the ultrasonic vibration is applied to the resin material in the dummy cavity or the resin pit so that the resin material in the dummy cavity or the resin pit may be heated and molten and a pumping effect may work to pressurize the resin material in the product cavity, and it is thus speculated that the strain of the product (product such as an optical lens) molded in the product cavity is reduced and the transferability is improved.

As in the present invention, application timing of the ultrasonic vibration is advantageously after the supply of the resin material to at least part of the dummy cavity or the resin pit is started and while the resin material in the runner has a predetermined viscosity. The ultrasonic vibration may also be applied while a compressed state is maintained after the resin material is filled into the product cavity and compressed, as in the present invention.

Furthermore, as in the present invention, the ultrasonic vibration is advantageously applied so that an amount of the resin material flowing into the product cavity from the dummy cavity and air gaps other than the product cavity may be in a range of 0.1% by volume to 5% by volume of the resin material filled into the product cavity.

Moreover, as in the present invention, the ultrasonic vibration is advantageously applied immediately after the filling of the resin material is started and until a gate in communication with the product cavity is sealed, and as in the present invention, a nozzle of a molding machine to supply the resin material to the mold is advantageously closed immediately after the filling of the resin material is completed. The present invention is suitable for molding of the optical lens requiring high accuracy and high quality, and particularly suitable for molding of a spectacle lens. In addition, when the spectacle lens is molded, a surface treatment is preferably implemented after molding, as in the present invention.

The method described above can be implemented by a molding machine of the present invention.

In a configuration of the present invention, a molding machine is provided in which a resin material in a molten state is filled into a cavity of a mold and cooled down to obtain a product in a predetermined shape, and the molding machine comprises: a mold having a product cavity to mold the product, a dummy cavity to mold a dummy product, and a runner by which the product cavity and the dummy cavity are connected; ultrasonic wave application means for applying ultrasonic vibration to the resin material in the dummy cavity; and control means for controlling application timing of the ultrasonic vibration by the ultrasonic wave application means.

According to this configuration, the ultrasonic vibration is applied to the dummy cavity to mold the dummy product at predetermined timing, thereby allowing improvement in transferability of the product molded in the product cavity and a reduction in strain.

Alternatively, in a configuration of the present invention, a molding machine is provided in which a resin material in a molten state is filled into a cavity of a mold and cooled down to mold a product in a predetermined shape, and the molding machine comprises: a mold having a plurality of product cavities to mold the products, a runner by which the product cavities are connected to each other, and a resin pit provided at a halfway part of the runner; ultrasonic wave application means for applying ultrasonic vibration to the resin material in the resin pit; and control means for controlling application timing of the ultrasonic vibration by the ultrasonic wave application means.

In this case, predetermined ultrasonic vibration is applied to the resin pit, thereby allowing improvement in the transferability of the product molded in the product cavity and a reduction in strain.

The application timing of the ultrasonic vibration by the control means may be after supply of the resin material to at least part of the dummy cavity or the resin pit is started and while the resin material in the runner has a predetermined viscosity. The timing may also be when a compressed state is maintained after the resin material is filled into the product cavity and compressed.

The mold may have a sprue in communication with the runner. Further, the resin pit may be formed at the midpoint of the runner. Still further, the resin pit may be formed at a part where the sprue communicates with the runner.

The molding machine of the present invention is suitable for the molding of the optical lens (including the spectacle lens) requiring high accuracy and high quality.

According to the present invention, the transferability is significantly improved and the strain is extremely reduced in a simple manner without increasing pressure during injection molding and making a highly accurate mold temperature adjustment and cooling time adjustment, thereby making it possible to mold a product with high accuracy and high quality, for example, the optical lens such as the spectacle lens.

### Brief Description of the Drawings

FIG. 1 is a diagram showing a mold of a molding machine according to a first embodiment of the present invention, wherein (a) is a schematic sectional view to explain a configuration of the mold, and (b) is a plan view of a movable mold in which cavities are formed;
FIG. 2 is a diagram showing a procedure of molding a product in the first embodiment;
FIG. 3 is a diagram showing the mold of the molding machine according to a second embodiment of the present invention, wherein (a) is a schematic sectional view to explain the configuration of the mold, and (b) is a plan view of the movable mold in which the cavities are formed;
FIG. 4 is a diagram showing a procedure of molding the product in the second embodiment;
FIG. 5 is a flow diagram for spectacle lens molding in the second embodiment; and
FIG. 6 is a perspective view showing a modification of a resin pit.

### Best Mode for Carrying out the Invention

Preferred embodiments of the present invention will hereinafter be described in detail with reference to the drawings.

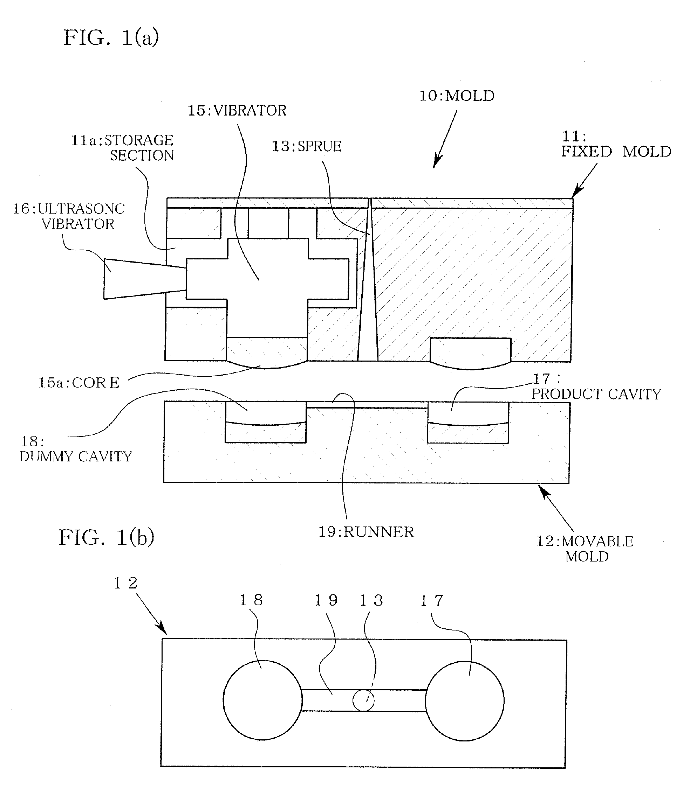

FIG. 1 is a diagram showing a mold of a molding machine according to a first embodiment of the present invention, wherein (a) is a schematic sectional view to explain a configuration of the mold, and (b) is a plan view of a movable mold in which cavities are formed.

### [Scope of Molding]

The "molding" to which a molding method of the present invention is applicable includes injection molding of a resin material injected into the cavity of the mold to mold a product in a predetermined shape, and also includes injection compression molding in which the resin material in the cavity is pressurized after the resin material is filled into the cavity.

### [Molding Material]

As one example of a material for molding used in the present invention, it is possible to use a thermoplastic resin or a thermoplastic resin composition in which organic matter or inorganic matter is mixed into the thermoplastic resin.

### [Configuration of the Mold]

A mold 10 comprises a fixed mold 11 and a movable mold 12. In the movable mold 12, there are formed a product cavity 17 to mold a product in a predetermined shape (such as an optical lens), and a dummy cavity 18 to mold a dummy product. Further, the product cavity 17 is coupled to the dummy cavity 18 by a runner 19.

In the fixed mold 11, a sprue 13 is formed in a protruding manner which supplies the resin material to the runner 19. An unshown nozzle of the molding machine is pressed against the sprue 13, and the resin material injected/supplied from the nozzle is supplied to the product cavity 17 and the dummy cavity 18 via the sprue 13 and the runner 19.

Furthermore, a storage section 11a is formed at a position corresponding to the dummy cavity 18, and the storage section 11a is provided with a vibrator 15. A tip of this vibrator 15 is adapted to contact the resin material supplied to the dummy cavity 18 via a core 15a during clamping.

An ultrasonic vibrator 16 is attached to a side surface of the vibrator 15, and vibration of this ultrasonic vibrator 16 is applied to the vibrator 15. [Vibration Application Means]

When the ultrasonic vibrator 16 vibrates, this vibration is transmitted to the vibrator 15, and will be vibration in a diametrical direction to be applied to the mold 10.

It is to be noted that the vibrator 15 may apply vibration without nodes to the resin material by actuation of the ultrasonic vibrator 16. In this case, the core 15a which applies the vibration of the vibrator 15 to the dummy cavity 18 has about the same outside diameter as an inside diameter of the dummy cavity 18.

Although not specifically shown in the drawing, the ultrasonic vibrator 16 is coupled to the vibrator 15 by a bar-shaped vibrating horn having a predetermined length, and the vibration of the ultrasonic vibrator 16 may be transmitted to the vibrator 15 via the vibrating horn.

The vibrator 15 and the ultrasonic vibrator 16 can be formed using a metal, ceramics, graphite or the like, but it is preferably formed by a metal such as an aluminum alloy, a titanium alloy or the like having small transmission loss if the transmission loss of the ultrasonic vibration is considered.

The vibrator 15 needs to be fixed so as to cause the least interfere to resonance. For the vibrator 15 not to have the nodes of the vibration, a flange (not shown) is advantageously provided in the ultrasonic vibrator 16, and this flange is fixed to the vibrator 15 by a bolt or the like.

The ultrasonic vibrator 16 is vibrated by an unshown ultrasonic oscillator. Since the ultrasonic oscillator responds to a change in a resonance frequency due to a temperature change or an acoustic load change due to a change in a molding condition, the oscillator is preferably an automatic frequency follow-up type oscillator with an amplitude control circuit.

Furthermore, when a necessary ultrasonic output does not reach a required value using one vibrator, a plurality of ultrasonic vibrators 16 can be used to the vibrator 15. In that case, a necessary number of ultrasonic vibrators 16 having the same vibration characteristic is prepared, and they may be attached onto an outer peripheral surface of the vibrator 15 at equal intervals.

Moreover, a known ultrasonic output synthesizer can be used to apply higher ultrasonic vibration. In this case, for example, the ultrasonic vibrators 16 are bonded to sides of a vibrating plate formed into a polygonal shape (an octagon or a polygonal with more sides) so as not to impair frequency characteristics, and these ultrasonic vibrators 16 are vibrated in phase, and their outputs are collected to a central portion, so that the vibration may be applied to the vibrator 15 from a resonance bar provided at the central portion. [Ultrasonic Oscillator]

As the ultrasonic oscillator (not shown) which applies the ultrasonic vibration to the resin material in the dummy cavity 18, it is possible to use an ultrasonic oscillator known from, for example, Japanese Patent Publication Laid-open No. 11-262938 disclosed in accordance with an application of the present applicant. [Vibration Frequency]

A vibration mode of the ultrasonic vibration oscillated from the ultrasonic oscillator may be such that it can apply predetermined vibration (amplitudes and a number of vibrations) to the resin material, and the vibration may be one of longitudinal vibration, lateral vibration, diametrical vibration and torsional vibration, or a combination of these vibrations.

A frequency of the ultrasonic vibration is preferably 1 KHz to 1 MHz, and it is preferable to select from a range of 10 KHz to 100 KHz for the vibration to effectively act on the resin material during molding.

Furthermore, the maximum amplitude of the ultrasonic vibration is determined by fatigue strength of a material constituting the mold 10. For example, when the mold 10 is made of an SUS-based material, the maximum amplitude is advantageously about 20 µm, about 40 µm for duralumin, and 100 µm for the titanium alloy.

### [Application Timing of the Ultrasonic Vibration]

The application timing of the ultrasonic vibration is an optional time when a gate of the product cavity 17 is sealed with the cooled resin material immediately after the injection of the resin material is started. It is to be noted that the unshown nozzle of the molding machine is advantageously closed (shut) immediately after filling of the resin material is completed while the ultrasonic vibration is being applied.

Furthermore, the ultrasonic vibration is preferably applied so that an amount of the resin material flowing from the dummy cavity 18 and air gaps other than the product cavity 17, in this embodiment, from the dummy cavity 18, the runner 19 and the like to the product cavity 17 may correspond to 0.1% by volume to 5% by volume, preferably 0.2% by volume to 2% by volume of a total capacity of the product cavity 17.

Time to reach this amount depends on a size of a product to be produced, but when the product is, for example, a spectacle lens, the time can be about 30 seconds to 60 seconds from the filling start of the resin material. In this case, the time is about 60 seconds when the spectacle lens is large, while it is about 30 seconds when the spectacle lens is small.

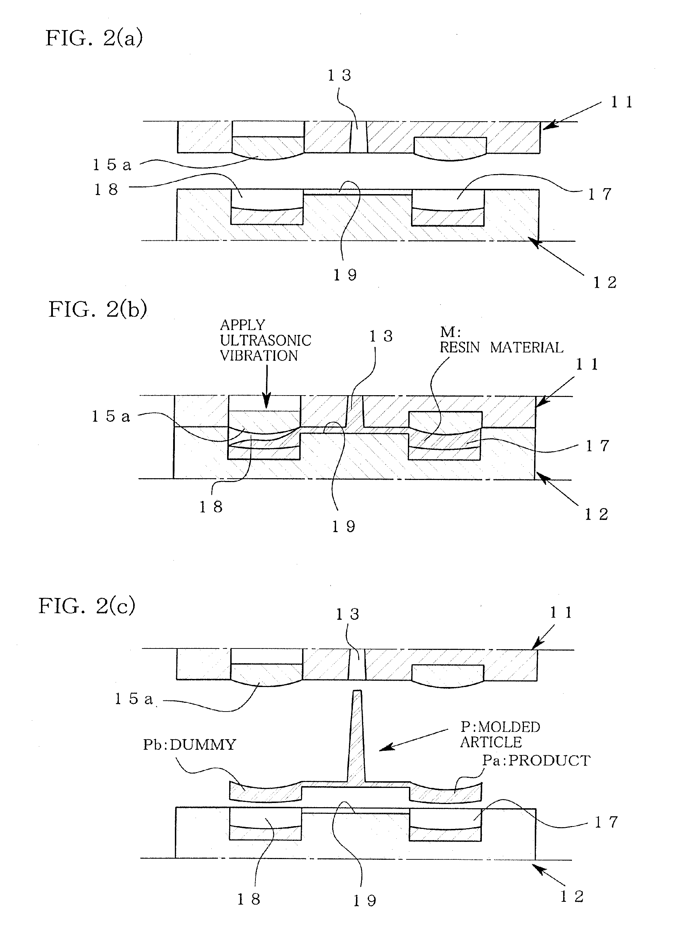

A procedure of molding the optical lens by the molding machine using the mold configured as described above will be described referring to FIG. 2.

First, the movable mold 12 is moved toward the fixed mold 11 to perform clamping, as shown in FIG. 2(a).

After the clamping is completed, a resin material M is supplied from the sprue 13 to the product cavity 17 through the runner 19. At this moment, part of the resin material M is also supplied to the dummy cavity 18 through the runner 19.

Then, as shown in FIG. 2(b), the ultrasonic oscillator is driven immediately after the filling of the resin material M is started, thereby applying the ultrasonic vibration from the vibrator 15 to the dummy cavity 18.

In this case, a pressurized state is still retained for a certain time (e.g., 45 seconds) after the filling of the resin material M into the product cavity 17 and the dummy cavity 18 is completed, and during this period, the ultrasonic vibration may be continuously applied. Further, after the filling of the resin material into the product cavity 17 and the dummy cavity 18 is completed, the nozzle is closed and the ultrasonic vibration may be applied while the resin is being pressurized without holding pressure. It is to be noted that in the latter case, it is preferable to continue applying the ultrasonic vibration for a certain time (e.g., 60 seconds) in accordance with the size of the product.

By applying the ultrasonic vibration, the resin material in the dummy cavity 18 is heated and molten, and caused to flow into the product cavity 17. (This is called "pumping effect" in this specification.) Thus, the resin material M filled into the product cavity 17 is pressurized, thereby allowing strain to be reduced and transferability to be improved.

At the instant when the resin material M in the product cavity 17 is cooled down and the gate of the product cavity 17 is thus cooled down and solidified, the application of the ultrasonic vibration is stopped, and the movable mold 12 is moved in a direction away from the fixed mold 11 to open the mold as shown in FIG. 2(c), thus taking out a product P. Since a product portion Pa (portion to be the optical lens) and a dummy product portion Pb are formed into the product P that has been taken out, the product portion Pa is only separated in a next process.

### [Second Embodiment]

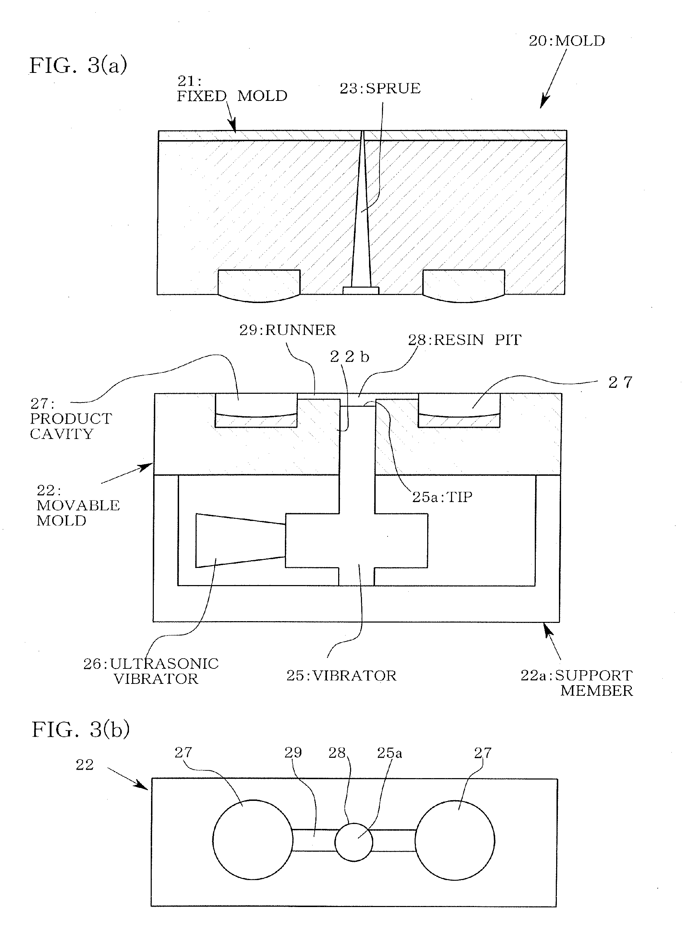

FIG. 3 is a diagram to explain a mold of a molding machine according to a second embodiment of the present invention, wherein (a) is a schematic sectional view to explain a configuration of the mold, and (b) is a plan view of a movable mold in which cavities are formed.

It is to be noted that formation of a spectacle lens as an optical lens will be described by way of example in the second embodiment.

A mold 20 comprises a fixed mold 21 and a movable mold 22. In the movable mold 22, there is formed a plurality of product cavities 27 to mold a product. The product cavities 27 are coupled by a runner 29. A resin material supplied via a sprue 23 formed in the fixed mold 21 is filled into the product cavities 27 via the runner 29, thus molding a product in a predetermined shape.

A resin pit 28 is formed at the midpoint of the runner 29, in this embodiment, at a part where the sprue 23 communicates with the runner 29, and a predetermined amount of the resin material is retained in the resin pit 28 when the product (spectacle lens) is molded. A capacity of this resin pit 28 is advantageously 3% or more with respect to a capacity of the product cavities 27, and preferably 10% or more.

However, a amount of the lost resin material increases over 60%, which is not preferable in practical use, and thus, it is preferably within 3% to 60%, and more preferably, within 10% to 40%.

In the movable mold 22, a through-hole 22b in communication with the resin pit 28 is formed in the same direction as a forward/backward moving direction of the movable mold 22, and part of a vibrator 25 is inserted in the through-hole 22b. Further, a tip 25a of the vibrator 25 forms a bottom of the resin pit 28.

The vibrator 25 is supported by a support member 22a attached to the movable mold 22 (opposite to the fixed mold 21). Further, a ultrasonic vibrator 26 is attached to a side surface of the vibrator 25.

It is to be noted that the vibrator 25, the ultrasonic vibrator 26, an ultrasonic oscillator and other basic configurations to apply vibration are the same as those in the first embodiment, and further detailed description thereof is not given.

The application timing of the ultrasonic vibration may be similar to that in the first embodiment, or may be simultaneous with injection. Moreover, as in the first embodiment, the ultrasonic vibration is preferably applied so that an amount of the resin material flowing from the resin pit 28 and the runner 29 to the product cavities 27 may correspond to 0.1% by volume to 5% by volume, preferably 0.2% by volume to 2% by volume of a total capacity of the product cavity 27.

Furthermore, a method of molding such a spectacle lens is realized by using the molding method and the molding machine of the present invention as described above, but more preferably, a convex surface of the spectacle lens further serves as a fixed mold, and the ultrasonic vibration is applied to that fixed mold.

Still further, it is preferred to shut a nozzle rather than hold pressure after the injection and filling of the resin material in suppressing residual strain, and moreover, greater clamping force reduces the strain and approximates designed power of the lens. When the pressure is held, the residual strain will decrease if the clamping force is reduced.

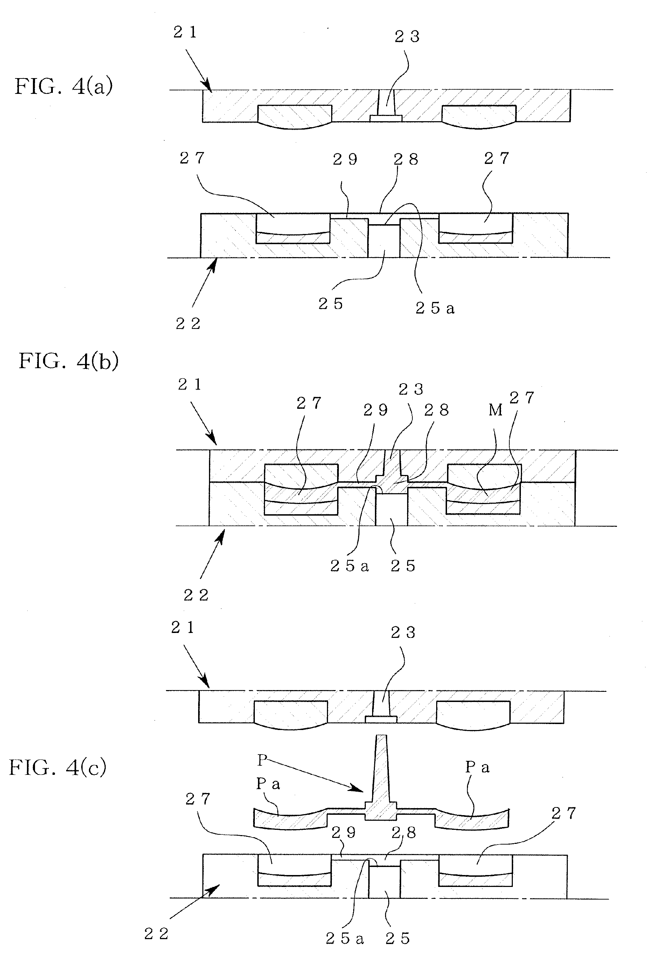

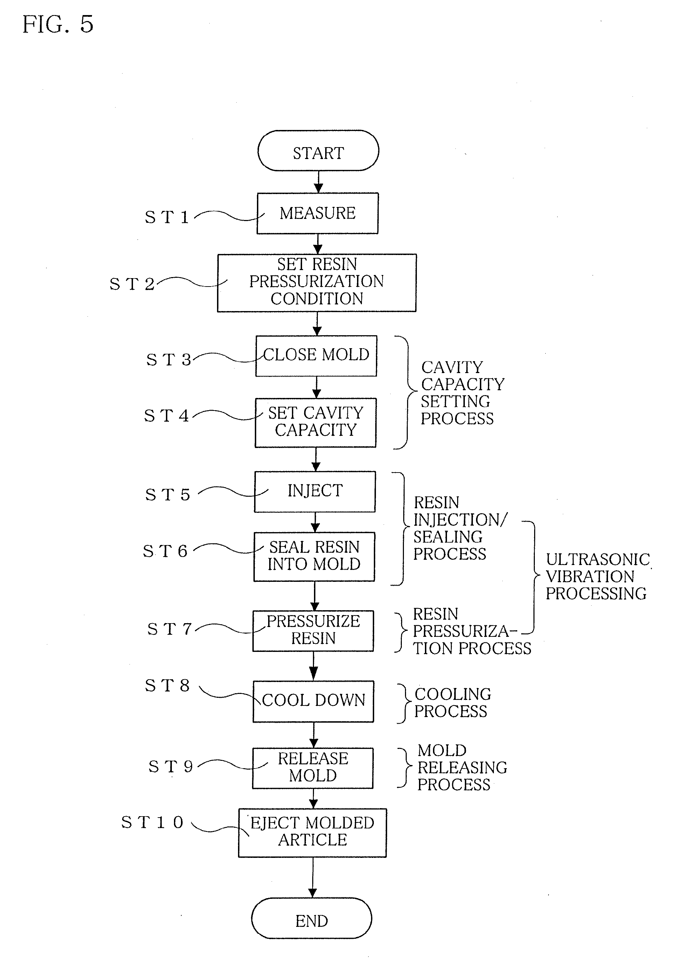

Next, there will be described, together with a flowchart of FIG. 5, a preferred procedure of molding the spectacle lens having a meniscus shape by use of a mold shown in FIG. 4(a) to FIG. 4(c) in the second embodiment.

It is to be noted that FIG. 4(a) to FIG. 4(c) illustrate how to drive the movable mold 22 and the fixed mold 21 of the mold of the molding machine, and also illustrate arrangements of a mold construct (23, 27, 28, 29) having the product cavity, the resin pit, the runner and the sprue, and of the vibrator 25.

First, a mold is selected in accordance with the kind of lens to be molded.

A mold is prepared which has the product cavity whose thickness is larger in a central portion than in a peripheral portion in a case of molding a positive-power lens, while a mold is prepared which has the product cavity whose thickness is smaller in the central portion than in the peripheral portion in a case of molding a negative-power lens.

In ST (step) 1, measurement is made. A raw resin put into a hopper (not shown) of an injection apparatus is plasticized, and the plasticized molten resin is introduced into an injection cylinder unit and measured therein. Here, the amount of the resin material is measured which is necessary for the mold construct having the product cavity, the resin pit, the runner and the sprue. It is to be noted that the measurement is generally operated independently in a cooling process described later in a molding cycle during continuous molding after an initial operation.

In ST2, a resin compression condition is set. This is done to adjust the clamping force depending on characteristics (such as a lens shape and lens power) of the lens to be molded in order to apply proper pressure to the resin in the product cavity in advance. Needless to say, this resin compression condition is changed depending on resin characteristics, and the resin characteristics are considered in all molding conditions.

In ST3, ST4, the mold is closed on a parting line, and the capacity of the product cavity is set. That is, the movable mold is carried forward to a preset product cavity capacity setting position. At this point, the capacity (thickness) of the product cavity is in a state made larger than the capacity (thickness) of the lens to be molded, that is, the thickness of the product to be taken out.

In ST5, injection is performed. The resin material measured in a measurement process is injected to the mold construct through a passage of the injection nozzle. That is, the resin material introduced into the injection cylinder unit of the injection apparatus and measured therein is injected by rotation of a screw. Then, the resin material is filled into the product cavity through the injection nozzle, a sprue of a sprue bush, the resin pit, the runner and the gate. When the resin material is filled into the product cavity, an injection speed is controlled at a predetermined speed. Further, as the product cavity is enlarged, it does not cause improper resin resistance with respect to a forming die, thus advancing the injection and filling.

At this point, the resin material is stored in the resin pit as shown in FIG. 4(b). Moreover, the ultrasonic oscillator is vibrated simultaneously with the start of supply of the resin material, thereby applying the ultrasonic vibration to the resin material in the resin pit 28 from the vibrator 25.

In ST6, the resin material is sealed in the mold. The injection nozzle is immediately closed by a nozzle shut mechanism (e.g., Japanese Utility Model Registration No. 2040188, Japanese Patent No. 3390781). That is, a nozzle shut pin is projected into the sprue to close a tip of a passage of the injection nozzle. Thus, the resin material is sealed in the forming die.

In ST7, the resin is pressurized. Compression is performed by a clamping device (not shown; e.g., Japanese Patent No. 3390781 mentioned above) of the molding machine, and the resin material sealed in the forming die is compressed and pressurized.

The ultrasonic vibration described above preferably continues up to these processes (ST5 to ST7). Especially, effects of the ultrasonic vibration can be promoted by using the nozzle shut mechanism.

Naturally, it is also possible to employ a method using the pressure holding instead of the nozzle shut mechanism.

That is, after a resin material M is filled into the product cavities 27, 27, the mold 20 maintains a compressed state for a certain time (e.g., 60 seconds when the nozzle is shut immediately after the filling of the resin material is completed, or 45 seconds when the pressurized state is maintained), and during this period, the ultrasonic vibration preferably continues.

In ST8, cooling is performed. For this purpose, temperature is controlled by a mold temperature adjustment device (not shown) so that temperatures of parts of the forming die may be brought to a predetermined set temperature in accordance with the characteristics of the lens to be molded.

The resin filled in the cavity solidifies and contracts as it is gradually cooled down in the compressed state, and thus molded into a predetermined product shape.

In ST9, in a mold release process, the pressure applied onto the resin material in the product cavity is reduced for a predetermined period after the cooling process is terminated, in a state where substantially constant relative positions of the movable mold and the fixed mold are maintained, and then the movable mold is moved from the fixed mold to open the mold. In ST10, the mold is then opened, and the product is ejected.

According to the mold 20 in this embodiment, a plurality of products can be handled, thus providing an advantage that manufacturing efficiency is high.

Next, a surface treatment method for the product spectacle lens will be described.

The spectacle lens is preferably subjected to a surface treatment to provide physical and chemical durability.

Here, the surface treatment is described which is implemented for the ejected product which has been subjected to gate cut processing and formed into a circular spectacle lens shape.

### [Surface Treatment of the Lens]

A coat forming a surface treatment layer preferably has a coat configuration of a composite structure combining at least two or more kinds of a hard coat layer, an oxide covering layer (antireflection film), an impact-resistant layer, a water repellent film layer, a foundation layer and the like. Normally, on a plastic lens base material, there is generally disposed a film configuration including the impact-resistant layer, the hard coat layer, the oxide covering layer (antireflection film) and the water repellent film layer, or a film configuration including the hard coat layer, the oxide covering layer (antireflection film) and the water repellent film layer. There is also a film configuration which only has the hard coat layer or which has the foundation layer as a layer with functionality which, for example, assists in coherent properties.

A substrate material forming the hard coat layer includes acrylic-based resin, vinyl-based resin, epoxy-based resin or the like, but an organic-silicon-based covering layer is particularly preferable. For example, a coating liquid containing an organic silicon compound and/or a hydrolysate thereof indicated by the following general formula, or a coating liquid containing the organic silicon compound and/or a hydrolysate thereof and oxide fine particles indicated by the following general formula is applied and cured on the base material. (e.g., Japanese Patent Publication Laid-open No. 3-51733, Publication WO99/57212)

R¹ₐ R²_{b} Si (OR³)_{4-(a+b)}

(where R¹, R² are alkyl, aryl, alkyl halide, aryl halide, alkenyl, or an organic group having an epoxy group, a (meth)acrylic oxy group, a mercapto group, an amino group or a cyano group whose carbon number is 1 to 10, and is bonded to silicon by Si-C bonding; R³ is an alkyl group, an alkoxyalkyl group, an acyl group, a phenyl group or an allylalkyl group whose number of carbon atoms is 1 to 8; a and b are 0, 1 or 2; and a+b is 1 or 2.)

Not only one of these kind of organic silicon compounds can be used, but also two or more kinds of them can definitely be used together.

Furthermore, the oxide fine particles contained in the coating liquid are not particularly limited, but include, for example, silicon, antimony, titanium, aluminum, tin, tungsten, zirconium, etc. These oxide fine particles have a particle diameter of, for example, 1 to 300 nm, and are used in a form of a colloidal solution in which the fine particles are dispersed in water, an organic solvent or a combination of these solvents, in order to enhance a refractive index and abrasion-resistant properties of the cure film and further to improve water resisting properties thereof. The kinds of oxide fine particles are preferably confected depending on a refractive index of the base material so that interference fringes may not emerge.

The coating liquid can further contain a curing agent to promote a reaction and to cure at low temperature.

For example, specific confection of the coating liquid (whose refractive index is about 1.50) and a method of forming the curing covering film are as follows.

In a glass vessel comprising agitation means, 47 pts. wt. of γ-glycidoxypropyltrimethoxysilane, 32 pts. wt. of thermoplastic polyurethane, 10 pts. wt. of acetic acid and 40 pts. wt. of diacetone alcohol are added, and 12 pts. wt. of 0.1 normal hydrochloric acid is dropped while agitating them. After termination of dropping, agitation is performed 24 hours, and a hydrolysate is obtained. Then, 120 pts. wt. of silica fine particles in which isopropyl alcohol is dispersed (whose solid content is 30% and whose mean particle diameter is 15 millimicron), 10 pts. wt. of acetic acid and 56 pts. wt. of diacetone alcohol are added, and agitated two hours. Subsequently, 48 pts. wt. of propylene glycol monomethyl ether, 24 pts. wt. of isopropyl alcohol, 5 pts. wt. of aluminum acetylacetone as the curing agent, and 0.3 pts. wt. of silicone-based interfacial active agent as a lubricant are added, and are sufficiently agitated, and then matured 48 hours, thus confecting the coating liquid.

For a coating method, a dipping method, a spin coat method and the like are preferably used, for example.

Both a single layer and multiple layers can be used for the antireflection film, and a film configuration in which a low refractive index layer and a high refractive index layer are alternately laminated can be used for a multilayer film. The oxide covering layer of the coat is a metal oxide covering layer having a single layer or two or more layers. Metal components constituting the oxide include, for example, aluminum, cerium, hafnium, indium, lanthanum, neodymium, antimony, scandium, silicon, tantalum, titan, yttrium, zinc, zirconium, niobium, etc., but these are not limitations.

Furthermore, the film can be formed by a vacuum deposition method, an ion beam deposition method, a sputtering method, ion plating, ion cluster beam deposition, etc.

For example, specifically, SiO₂ is vacuum-deposited to a film thickness of about 0.5 µ under a pressure equal to or less than 6.7 × 10⁻³ Pa directly on the lens base material on which the organic silicon-based covering layer is formed or on the base material before covered, and about γ/17 (γ is 550 mµ) of ZrO₂ is deposited thereon, and then SiO₂ is deposited thereon until an optical film thickness which is the sum of the two substances is about γ/4. Then, γ/2 of ZrO₂ is deposited thereon, and SiO₂ is deposited thereon until it has a thickness of γ/4, thereby obtaining the plastic lens having the antireflection film which is the oxide covering layer.

The water repellent film layer is effectively and preferably formed on the antireflection film, and for example, a silane-based compound containing fluorine is dissolved into a fluorine-based solvent to obtain a water repellent thin film material, and the material is then impregnated into a sintered filter made of a porous material, whereby the film is formed on a plastic optical member by vacuum deposition while the material is heated under manufacturing conditions including, for example, a heating temperature of 200 to 600°C, a vacuum degree in a vacuum deposition device of 1.3 × 10⁻¹ to 10⁻³ Pa and a deposition speed of 1 × 10⁻³ mg/cm² second to 1 × 10⁻⁵ mg/cm² second.

The impact-resistant layer is formed directly on the base material, that is, a lower layer of the hard coat layer. For example, a thermoplastic or thermosetting polyurethane-based resin can be used for a material of the impact-resistant layer, and the layer is used under application conditions including, for example, a temperature of 100°C to 140°C and a thickness of about 0.05 to 8 µm on average.

### [Example]

A spectacle lens was molded using the mold of the first embodiment, and effects of the present invention were inspected. Conditions for the spectacle lens and injection molding are as follows.
Resin material: polycarbonate-based resin
Molding method: injection compression molding (molding method in the first embodiment)
Molding temperature: 250°C
Spectacle lens diameter: diameter (2R) = 77 mm
Spectacle lens minimum thickness: 1.4 mm
Spectacle lens power (target power): -3.84 (D)
Ultrasonic vibration frequency: 19 KHz
Ultrasonic vibration amplitude: 5 µm
Application time of the ultrasonic vibration: 60 sec Pressure holding: 85 MPa
Time to maintain pressurized state: 45 sec

It is to be noted that the spectacle lens was injection-molded in a comparative example under the same condition as that in an example of the present invention except that the ultrasonic vibration was not applied.

Results of the example of the present invention and the comparative example are shown in a table below.

In addition, an evaluation method is as follows. [Strain Evaluation Method]

Visual judgment was made by a crossed-Nicol method using a strain detector manufactured by HEIDON corporation.

A judgment standard is as follows. In accordance with a view from a transmission window of the strain detector, "×" was given to one that was deeply colored all over to a notable degree in an area within a lens central radius of 35 mm, while "○" was given to one that was not optically colored.

### [Power Evaluation Method]

Measurement was made using AL-3300 (automatic lens meter) manufactured by HOYA.

Judgment was made so that one within ±0.125 (D) was regarded as nondefective in power and one above this value was regarded as defective in power with reference to a target power.

It is to be noted that a lens power is generally set at a pitch of 0.25 (D) for the spectacle lens, but in the present example, an optional target power was set instead of setting the practical lens power, and transfer accuracy was evaluated on the basis of deviation from the target power.

**Table 1**

| | Strain | Measured power (D) | Transfer accuracy (%) Power by molding/ target power |
|---|---|---|---|
| Example 1 | ○ | -3.80 | 99.0 |
| Comp. Example | × | -3.66 | 95.3 |

In this way, according to the present invention, strain was reduced and the power was improved to a great extent as compared with those in ordinary injection compression molding. Thus, it was found out that vibration pressure was applied to a resin material in a molten state in a product cavity while utilizing heating effects and pumping effects provided by applying the ultrasonic vibration, so that occurrence of the strain could be effectively restrained and transferability could be significantly improved.

While the preferred embodiments of the present invention have been described, the present invention is not at all limited to the embodiments described above, and various modifications can be made within the scope of application of the present invention.

For example, the injection compression molding machine has been described by way of example in the embodiments, but other injection molding machines can also be applied to the method and molding machine of the present invention.

Furthermore, in the second embodiment described above, the resin pit 28 is provided at the portion coupled to the sprue 23 substantially at the midpoint between the two product cavities 27, but the resin pit 28 may be formed into other parts as long as those parts are halfway parts of the runner 29.

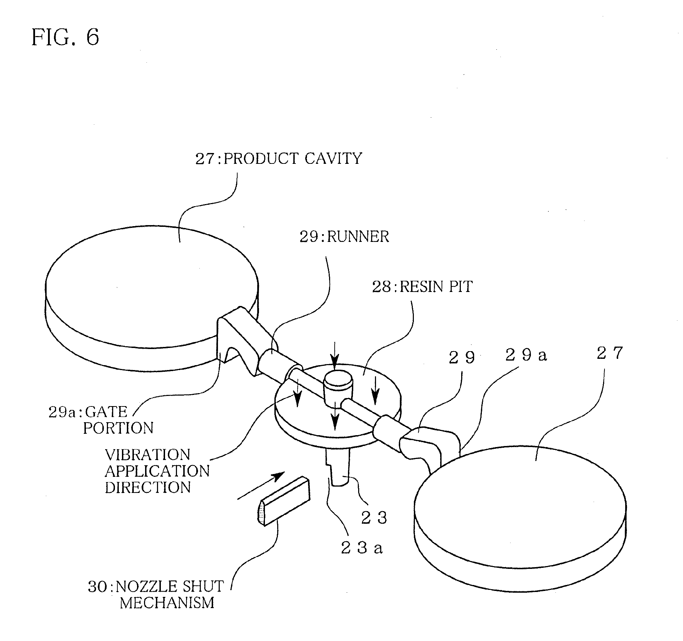

Moreover, FIG. 6 is a perspective view showing a shape of the preferred resin pit when a nozzle shut mechanism 30 is used. In FIG. 6, the same numerals are assigned to the same members and the same parts as those of the mold in the second embodiment. It is to be noted that a numeral 29a denotes a gate portion. In this modification, for the purpose of the lens whose diameter is 77 mm in the mold of the first embodiment, the resin pit 28 is formed at a portion where the sprue 23 is coupled to the runner 29, and the preferably used resin pit 28 has a pseudo-circular portion whose diameter is 20 mm to 40 mm and whose thickness is 2 mm to 4 mm.

Next, another preferable resin pit has a shape substantially similar to that in FIG. 6, but it has sizes including a diameter of 50 φ, a curvature of about 50 R and a thickness of 2 mm to 4 mm, and comprises a curved upper surface. In this case, the pumping effects are better with the curved shape than with a planar shape.

### Industrial Applicability

The present invention can be effectively utilized in various fields of optical lens by providing, for example, a spectacle lens to enable a technical improvement, and in particular, the present invention can be effectively utilized in fields of spectacle lenses.

## Claims

1. A molding method using ultrasonic vibration in which a resin material in a molten state is filled into a cavity of a mold and cooled down to obtain a product in a predetermined shape, the method being **characterized by**:
preparing the mold having a product cavity to mold the product, a dummy cavity to mold a dummy product, and a runner by which the product cavity and the dummy cavity are connected;
filling the resin material into the product cavity and supplying the resin material in the molten state to at least part of the dummy cavity; and
applying the ultrasonic vibration to the resin material in the dummy cavity at predetermined timing.

2. A molding method using ultrasonic vibration in which a resin material in a molten state is filled into a cavity of a mold and cooled down to mold a product in a predetermined shape, the method being **characterized by**:
preparing the mold having a plurality of product cavities to mold the products, a runner by which the product cavities are connected to each other, and a resin pit provided at a halfway part of the runner;
supplying the resin material to the resin pit and filling the resin material into all of the plurality of product cavities; and
applying the ultrasonic vibration to the resin material in the resin pit at predetermined timing.

3. The molding method using the ultrasonic vibration according to claim 1 or 2, **characterized in that** the predetermined timing is after start of supply of the resin material to at least part of the dummy cavity or the resin pit and while the resin material in the runner has a predetermined viscosity.

4. The molding method using the ultrasonic vibration according to any one of claims 1 to 3, **characterized in that** the ultrasonic vibration is applied while a compressed state is maintained after the resin material is filled into the product cavity and compressed.

5. The molding method using the ultrasonic vibration according to any one of claims 1 to 4, **characterized in that** the ultrasonic vibration is applied so that an amount of the resin material flowing into the product cavity from the dummy cavity and air gaps other than the product cavity is in a range of 0.1% by volume to 5% by volume of the resin material filled into the product cavity.

6. The molding method using the ultrasonic vibration according to any one of claims 1 to 5, **characterized in that** the ultrasonic vibration is applied immediately after the filling of the resin material is started and until a gate in communication with the product cavity is sealed.

7. The molding method using the ultrasonic vibration according to any one of claims 1 to 6, **characterized in that** a nozzle of a molding machine to supply the resin material to the mold is closed immediately after the filling of the resin material is completed.

8. The molding method using the ultrasonic vibration according to claim 7, wherein the product is an optical lens.

9. The molding method using the ultrasonic vibration according to claim 7, **characterized in that** the optical lens is a spectacle lens, and a step of subjecting the obtained spectacle lens to a surface treatment is further added.

10. An optical lens **characterized by** being manufactured by a molding method according to claim 8 or 9.

11. A molding machine in which a resin material is filled into a cavity formed in a mold and compressed to mold a product in a predetermined shape, the molding machine being **characterized by** comprising:
the mold having a product cavity to mold the product, a dummy cavity to mold a dummy product, and a runner by which the product cavity and the dummy cavity are connected;
ultrasonic wave application means for applying ultrasonic vibration to the resin material in the dummy cavity; and
control means for controlling application timing of the ultrasonic vibration by the ultrasonic wave application means.

12. A molding machine in which a resin material into a cavity formed in a mold and compressed to mold a product in a predetermined shape, the molding machine being **characterized by** comprising:
the mold having a plurality of product cavities to mold the products, a runner by which the product cavities are connected to each other, and a resin pit provided at a halfway part of the runner;
ultrasonic wave application means for applying ultrasonic vibration to the resin material in the resin pit; and
control means for controlling application timing of the ultrasonic vibration by the ultrasonic wave application means.

13. The molding machine according to claim 11 or 12, **characterized in that** timing when the control means applies the ultrasonic vibration is after start of supply of the resin material to at least part of the dummy cavity or the resin pit and while the resin material in the runner has a predetermined viscosity.

14. The molding machine according to any one of claims 11 to 13, **characterized in that** the timing when the control means applies the ultrasonic vibration is while a compressed state is maintained after the resin material is filled into the product cavity and compressed.

15. The molding machine according to any one of claims 11 to 14, **characterized in that** the mold has a sprue in communication with the runner in addition to the runner.

16. The molding machine according to any one of claims 11 to 15, **characterized in that** the resin pit located at a midpoint of the runner.

17. The molding machine according to any one of claims 11 to 16, wherein the product is an optical lens.
